# EUROPÄISCHE PATENTSCHRIFT

(11) **EP 1 109 696 B1**
(45) Veröffentlichungstag und Bekanntmachung des Hinweises auf die Patenterteilung: **05.06.2002**
(21) Anmeldenummer: 99950461.6
(22) Anmeldetag: 29.07.1999
(51) Int. Cl.: B60N 2/30, B60N 2/42

(54) **INTEGRIERBARER KINDERSITZ FÜR EINEN KRAFTFAHRZEUGSITZ**
INTEGRABLE CHILD SEAT FOR AN AUTOMOBILE SEAT
SIEGE ENFANT INTEGRABLE POUR AUTOMOBILE

(30) Priorität: 01.09.1998 DE 19839673
(43) Veröffentlichungstag der Anmeldung: 27.06.2001
(73) Patentinhaber: GRAMMER AG, 92224 Amberg (DE)
(72) Erfinder: AUGSBERGER, Norbert, D-92256 Hahnbach (DE); GEBERT, Gerhard, D-92442 Wackersdorf (DE); DELLING, Gerhard, D-92546 Schmidgaden (DE); KIRCHNER, Peter, D-81375 München (DE); HALLER, Erwin, D-92262 Birgland (DE)
(74) Vertreter: LOUIS, PÖHLAU, LOHRENTZ & SEGETH
(86) Internationale Anmeldenummer: DE9902337
(87) Internationale Veröffentlichungsnummer: WO0012349

(56) Entgegenhaltungen:
- EP-A- 0 538 490
- EP-A- 0 554 807
- EP-A- 0 650 864
- DE-A- 4 423 218
- FR-A- 2 101 129
- US-A- 2 823 730
- US-A- 4 440 441

## Beschreibung

Die Erfindung betrifft einen integrierbaren Kindersitz für einen Kraftfahrzeugsitz, insbes. für einen Kraftfahrzeugsitz im Fondbereich, wobei der Kindersitz zwischen einer eingeklappten tiefen Position und einer aufgeklappten erhöhten Position verstellbar ist, mit einem Grundteil und einem Tragteil, die mittels einer vorderen und einer rückseitigen Parallelogrammarm-Einrichtung miteinander gelenkig verbunden sind, mit einer Diagonalstrebeneinrichtung, die mit einem Führungsendabschnitt entlang einer am Tragteil oder an der vorderen Parallelogrammarm-Einrichtung vorgesehenen Führungseinrichtung linear beweglich geführt ist, und mit einer Sperreinrichtung zum Fixieren des Tragteils in der erhöhten Position.

Ein solcher integrierbarer Kindersitz ist aus der DE 44 23 218 A1 bekannt. Bei diesem bekannten Kindersitz kann die Diagonalstrebeneinrichtung einen verlängerbaren Bereich aufweisen, so daß sich bei einer unfallbedingten starken Verzögerung des Fahrzeugs, in welchem sich der Kindersitz befindet, das Tragteil - insbes. aufgrund der Beschleunigungskräfte, die an dem jeweiligen, auf dem Kindersitz sitzenden Kind angreifen - nach vorne bewegt. Durch die Verlängerung der Diagonalstrebeneinrichtung infolge solcher unfallbedingter Beschleunigungskräfte wird das Tragteil dieses bekannten Kindersitzes - mit der darauf vorgesehenen Sitzpolsterung - weiter als normal nach vorne schwenken, d.h. die Sitztiefe wird vorne größer. Das bedeutet, daß ein auf der Polsterung des Tragteils des Kindersitzes sitzendes Kind bei einer unfallbedingten starken Verzögerung des Fahrzeugs nach vorne unten beschleunigt wird.

Der Erfindung liegt die Aufgabe, einen integrierten Kindersitz der eingangs genannten Art zu schaffen, bei welchem bei einer unfallbedingten Beschleunigung die mit einem Kind gewichtsbelastete Tragplatte des Kindersitzes nicht nach vorne unten sondern insbesondere rückseitig nach unten bewegt wird, um gleichsam ein rückseitiges Eintauchen des auf dem Kindersitz sitzenden Kindes zu bewirken.

Diese Aufgabe wird bei einem integrierten Kindersitz der eingangs genannten Art erfindungsgemäß dadurch gelöst, daß die Diagonalstrebe mit ihrem vom Führungsendabschnitt entfernten zweiten Endabschnitt mit der rückseitigen Parallelogrammarm-Einrichtung gelenkig verbunden ist, und daß die rückseitige Parallelogrammarm-Einrichtung eine Crash-Schwachstelle aufweist.

Im erhöhten aufgeklappten und gewichtsbelasteten Zustand des Kindersitzes, d.h. des mit einer Polsterung versehenen Tragteiles des erfindungsgemäßen Kindersitzes, knickt die rückseitige Parallelogrammarm-Einrichtung bei einem Crash, d.h. bei entsprechend großen Beschleunigungskräften an der Crash-Schwachstelle ein, wobei die durch die Sperreinrichtung zwischen dem Tragteil und der vorderen Parallelogrammarm-Einrichtung fixierte, d.h. festgehaltene Diagonalstrecken-Einrichtung und folglich das Tragteil rückseitig nach unten verlagert werden. Das Tragteil führt also eine begrenzte Bewegung nach vorne und gleichzeitig mit seinem rückseitigen Abschnitt eine definierte Bewegung nach unten durch. Ein auf dem aufgeklappten Kindersitz bzw. dem gepolsterten Tragteil sitzendes Kind wird also nicht nach vorne unten sondern rückwärts definiert, quasi schaukelartig, nach unten bewegt, was unter Sicherheitsgesichtspunkten von Vorteil ist.

Als zweckmäßig hat es sich bei dem erfindungsgemäßen Kindersitz erwiesen, wenn die Gelenkverbindung der Diagonalstrebeneinrichtung mit der rückseitigen Parallelogrammarm-Einrichtung und die Crash-Schwachstelle der rückseitigen Parallelogrammarm-Einrichtung eng benachbart vorgesehen sind bzw. axial mindestens annähernd fluchten, weil dann bei einem Crash in der aufgeklappten erhöhten Position des gewichtsbelasteten Kindersitzes bzw. des gepolsterten Tragteiles des Kindersitzes genau definierte Knick- bzw. Bewegungsverhältnisse der Komponenten des Kindersitzes, d.h. der Parallelogrammarm-Einrichtungen, der Diagonalstrebeneinrichtung und des Tragteiles gegeben sind.

Die Parallelogrammarm-Einrichtungen können als U-Profilelemente mit einem Grundteil und mit vom Grundteil seitlich wegstehenden Schenkelelementen ausgebildet sein. Die besagten U-Profilelemente können z.B. von passend gekanteten Blech-Stanzteilen oder von Blech-Flächenelementen, die miteinander verschweißt sind, gebildet sein.

Bei einer Ausbildung der oben genannten Art können die Schenkelelemente der rückseitigen Parallelogrammarm-Einrichtung zur Ausbildung der Crash-Schwachstelle miteinander deckungsgleich vorgesehene Aussparungen aufweisen. Selbstverständlich kann auch das Grundteil der rückseitigen Parallelogrammarm-Einrichtung mit wenigstens einer entsprechend positionierten Aussparung ausgebildet sein, um die Crash-Schwachstelle zu definieren.

Erfindungsgemäß kann Sperreinrichtung, mit welcher das gepolsterte Tragteil in der aufgeklappten erhöhten Position festgelegt wird, zum Festlegen des Führungsendabschnittes der Diagonalstrebeneinrichtung im Übergangsbereich zwischen dem Tragteil und der vorderen Parallelogrammarm-Einrichtung oder zwischen dem Tragteil und der vorderen Parallelogrammarm-Einrichtung vorgesehen sein.

Weitere Einzelheiten, Merkmale und Vorteile ergeben sich aus der nachfolgenden Beschreibung eines in der Zeichnung dargestellten Ausführungsbeispieles wesentlicher Einzelheiten des erfindungsgemäßen integrierbaren Kindersitzes für einen Kraftfahrzeugsitz, insbes. für einen Kraftfahrzeugsitz im Fondbereich eines Kraftfahrzeuges. Es zeigen:
- Fig. 1: in einer perspektivischen Darstellung die wesentlichen Einzelheiten einer Ausbildung des Kindersitzes, wobei auf die Darstellung der Polsterung des Tragteiles verzichtet worden ist, und
- Fig. 2: in einer schematischen Seitenansicht diverse Positionen bzw. Stellungen der in Fig. 1 räumlich gezeichneten Einzelteile des Kindersitzes bei einem Crash, wenn auf dem Kindersitz ein Kind sitzt.

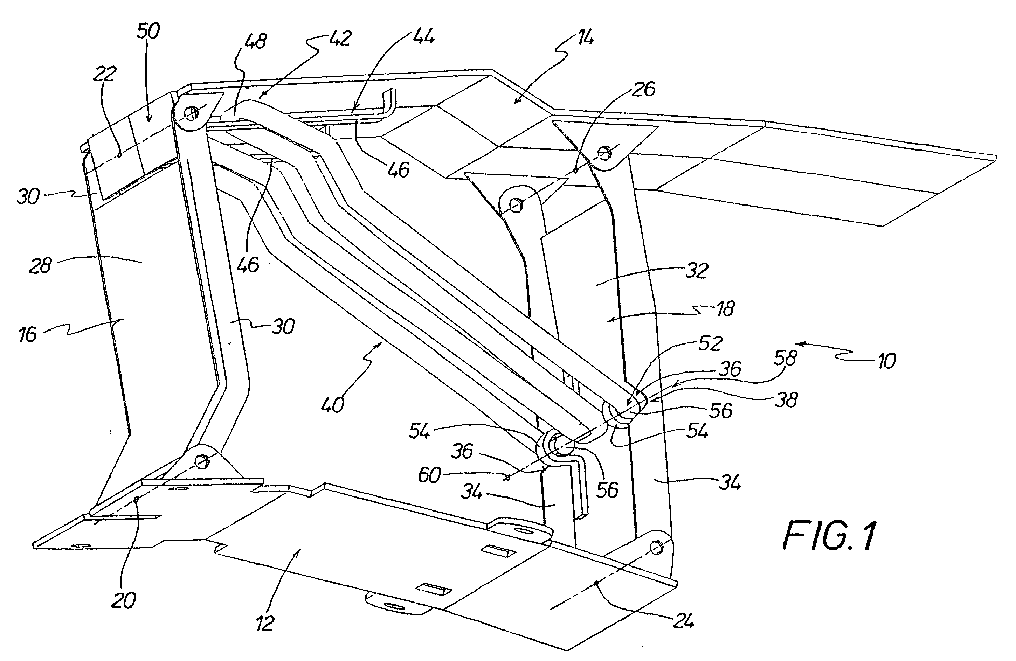

Fig. 1 zeigt perspektivisch wesentliche Einzelheiten eines in einen Kraftfahrzeugsitz integrierbaren Kindersitzes 10, insbes. für einen Kraftfahrzeugsitz im Fondbereich eines Fahrzeugs. Der Kindersitz 10 weist ein flächiges Grundteil 12 und ein flächiges Tragteil 14 auf, die miteinander mittels einer vorderen Parallelogrammarm-Einrichtung 16 und einer rückseitigen Parallelogrammarm-Einrichtung 18 schwenkbeweglich, d.h. zwischen einer eingeklappten tiefen Position und einer aufgeklappten erhöhten Position verschwenkbar sind. Zu diesem Zwecke ist die vordere Parallelogrammarm-Einrichtung 16 mittels einer Schwenkachse 20 mit dem Grundteil 12 und mittels einer dazu parallelen Schwenkachse 22 mit dem Tragteil 14 und die rückseitige Parallelogrammarm-Einrichtung 18 mittels einer zu den Schwenkachsen 20 und 22 parallelen Schwenkachse 24 mit dem Grundteil 12 und mittels einer zu den Schwenkachsen 20, 22 und 24 parallelen Schwenkachse 26 mit dem Tragteil 14 gelenkig verbunden. Die Schwenkachsen 20, 22, 24 und 26 sind in Fig. 1 nur durch ihren dünnen strichpunktierten Mittellinien verdeutlicht.

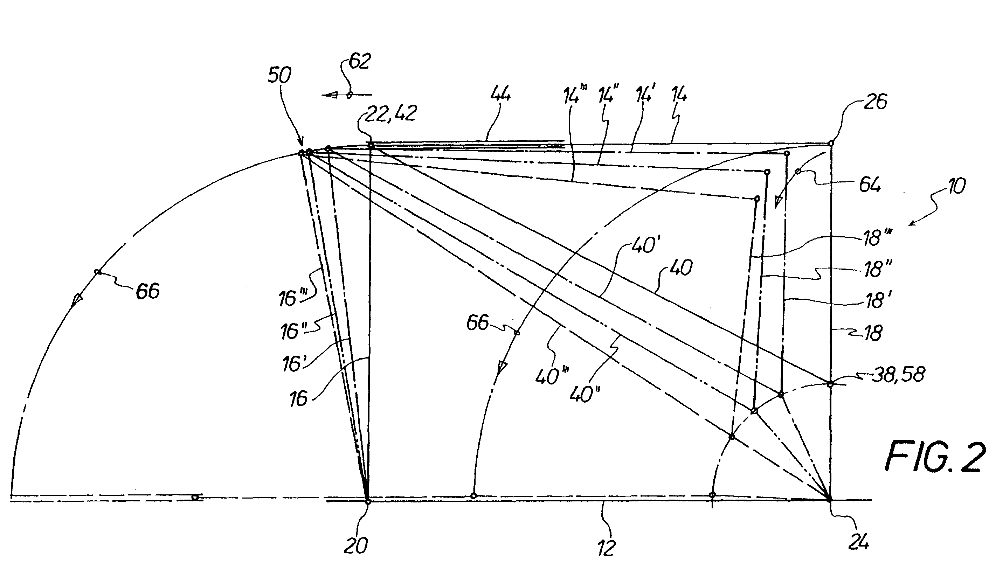

Die vordere Parallelogrammarm-Einrichtung 16 und die rückseitige Parallelogrammarm-Einrichtung 18 sind als U-Profilelemente ausgebildet. Die vordere Parallelogrammarm-Einrichtung 16 weist ein abgewinkeltes Grundteil 28 und vom Grundteil 28 seitlich in die gleiche Richtung wegstehende abgewinkelte Schenkelelemente 30 und die rückseitige Parallelogrammarm-Einrichtung 18 weist ein Grundteil 32 und zwei seitlich vom Grundteil 32 in die gleiche Richtung wegstehende Schenkelelemente 34 auf. Die Schenkelelemente 34 der rückseitigen Parallelogrammarm-Einrichtung 18 sind mit Aussparungen 36 ausgebildet, die von der Seite gesehen deckungsgleich vorgesehen sind. Die beiden Aussparungen 36 in den Schenkelelementen 34 der rückseitigen Parallelogrammarm-Einrichtung 16 bilden eine Crash-Schwachstelle 38, um welche die rückseitige Parallelogrammarm-Einrichtung 18 abknickt, wenn auf ein auf dem Kindersitz 10 bei aufgeklapptem erhöhtem Tragteil 14 sitzenden Kind crashbedingte Kräfte einwirken, die über das aufgeklappte erhöhte Tragteil 14 an der Crash-Schwachstelle 38 wirksam werden. Dieses Abknicken ist in Fig. 2 schematisch verdeutlicht, worauf weiter unten noch detaillierter eingegangen wird.

Der Kindersitz 10 weist außerdem eine Diagonalstrebeneinrichtung 40 auf, die - wie aus Fig. 1 ersichtlich ist - bspw. von einer mehrfach um 180° umgebogenen Stange aus einem geeigneten Metall oder einer geeigneten Metallegierung bestehen kann. Die Diagonalstrebeneinrichtung 40 ist mit einem Führungs-Endabschnitt 42 entlang einer am Tragteil 14 vorgesehenen Führungseinrichtung 44 linear beweglich geführt, um das Tragteil 14 zwischen einer eingeklappten tiefen Position, in welcher das Tragteil 14 zum Grundteil 12 benachbart ist, und einer aufgeklappten erhöhten Position, in welcher das Tragteil 14 vom Grundteil 12 einen entsprechenden Höhenabstand aufweist, verstellen bzw. verschwenken zu können. Bei dem in Fig.1 gezeichneten Ausführungsbeispiel des Kindersitzes 10 ist die Führungseinrichtung 44 von zwei Stangen 46 gebildet, die an der Unterseite des Tragteiles 14 zueinander parallel verlaufend fixiert sind. Die Diagonalstrebeneinrichtung 40 weist an ihrem Führungs-Endabschnitt 42 zwei U-förmig gebogene Abschnitte 48 auf, mit welchen die Stangen 46 der Führungseinrichtung 44 umgriffen werden.

In der aufgeklappten erhöhten Position wird das Tragteil 14 durch eine Sperreinrichtung 50 fixiert. Zu diesem Zwecke kann die Sperreinrichtung 50 bspw. am Tragteil 14 oder am Führungs-Endabschnitt 42 der Diagonalstrebeneinrichtung 40 formschlüssig angreifen.

Die Diagonalstrebeneinrichtung 40 weist einen vom Führungs-Endabschnitt 42 entfernten zweiten Endabschnitt 52 auf, der mit der rückseitigen Parallelogrammarm-Einrichtung 18 gelenkig verbunden ist. Zu diesem Zwecke stehen bei dem in Fig. 1 dargestellten Ausführungsbeispiel des Kindersitzes 10 bspw. vom flächigen Grundteil 32 der rückseitigen Parallelogrammarm-Einrichtung 18 zwei Lagerbügel 54 weg, in welche die beiden einander zugewandten abgewinkelten Enden 56 des zweiten Endabschnittes 52 der Diagonalstrebeneinrichtung 40 hineinstehen. Die Lagerbügel 54 sind am Grundteil 32 fixiert. Die Lagerbügel 54 und die zugehörigen Enden 56 der Diagonalstrebeneinrichtung 40 bilden somit eine Gelenkverbindung 58, deren Mittellinie bzw. Schwenkachse durch die strichpunktierte Linie 60 (sh. Fig. 1) verdeutlicht ist. Die Fig. 1 verdeutlicht außerdem, daß die Gelenkverbindung 58 der Diagonalstrebeneinrichtung 40 mit der rückseitigen Parallelogrammarm-Einrichtung 18 und die Crash-Schwachstelle 38 eng benachbart bzw. axial mindestens annähernd fluchtend vorgesehen sind.

Fig. 2 verdeutlicht schematisch in einer Seitenansicht die wesentlichen Einzelteile des Kindersitzes 10 - ähnlich wie die Fig. 1 - mit dem Grundteil 12, der vorderen Parallelogrammarm-Einrichtung 16, der rückseitigen Parallelogrammarm-Einrichtung 18, dem Tragteil 14 und der Diagonalstrebeneinrichtung 40. Gleiche Einzelheiten sind in Fig. 2 mit denselben Bezugsziffern wie in Fig. 1 bezeichnet, das gilt bspw. auch für die Schwenkachse 20, die Schwenkachse 22, die Schwenkachse 24 und die Schwenkachse 26 sowie für die Gelenkverbindung 58 zwischen der Diagonalstrebeneinrichtung 40 und der rückseitigen Parallelogrammarm-Einrichtung 18 und für die Crash-Schwachstelle 38 an der rückseitigen Parallelogrammarm-Einrichtung 18 des Kindersitzes 10. Mit durchgezogenen Linien sind das Tragteil 14, die vordere Parallelogrammarm-Einrichtung 16 und die rückseitige Parallelogrammarm-Einrichtung 18 verdeutlicht (sh.Fig. 2). Mit strichpunktierten Linien ist nach einem Crash bei entsprechender Gewichtsbelastung des Kindersitzes 10 bei entsprechend um die Crash-Schwachstelle 38 abgewinkelter Zwischenstellung die rückseitige Parallelogrammarm-Einrichtung mit der Bezugsziffer 18' sowie das Tragteil mit der Bezugsziffer 14' und die vordere Parallelogrammarm-Einrichtung mit der Bezugsziffer 16' gezeichnet. Mit doppelt strichpunktierten Linien ist eine weiter abgeknickte Zwischenstellung der rückseitigen Parallelogrammarm-Einrichtung mit der Bezugsziffer 18'', das Tragteil mit der Bezugsziffer 14'' und die vordere Parallelogrammarm-Einrichtung mit der Bezugsziffer 16'' bezeichnet.

Die rückseitige Parallelogrammarm-Einrichtung 18 knickt um die Crash-Schwachstelle 38 nur so weit ab, bis ihr Teilabschnitt zwischen der Schwenkachse 24 und der Crash-Schwachstelle 38 mit der Diagonalstrebeneinrichtung 40 fluchtet, d.h. eine gerade Linie bildet. Dieser Zustand ist in Fig. 2 mit strichlierten Linien dargestellt, wobei die vordere Parallelogrammarm-Einrichtung mit der Bezugsziffer 16''', die rückseitige Parallelogrammarm-Einrichtung mit der Bezugsziffer 18''' und das Tragteil mit der Bezugsziffer 14''' bezeichnet ist.

Aus Fig. 2 ist ohne weiteres zu erkennen, daß im aufgeklappten erhöhten Zustand des Kindersitzes 10 bei einer Gewichtsbelastung des Tragteiles 14 durch ein auf dem Tragteil bzw. einer Polsterung des Tragteiles 14 sitzendes Kind bei einem Crash und folglich einem Abknicken der rückseitigen Parallelogrammarm-Einrichtung 18 an der Crash-Schwachstelle 38 das Tragteil 14 mit seinem Vorderabschnitt auf quasi gleichbleibender Höhe nach vorne bewegt wird, was durch den Pfeil 62 verdeutlicht ist, und daß gleichzeitig der rückseitige Abschnitt des Tragteiles 14 bogenförmig sowohl nach vorne als auch nach unten bewegt wird, was durch den bogenförmigen Pfeil 64 verdeutlicht ist. Es ergibt sich somit gleichsam ein rückseitiges Eintauchen des Tragteiles 14, was unter Sicherheitsgesichtspunkten vorteilhaft ist.

Der in Fig. 2 durch die durchgezogenen, durch die strichpunktierten, durch die doppelt strichpunktierten und durch die strichlierten Linien angedeutete Bewegungsverlauf der vorderen Parallelogrammarm-Einrichtung 16 der rückseitigen Parallelogrammarm-Einrichtung 18, der Diagonalstrebeinrichtung 40 und des Tragteiles 14 sind nur dann möglich, wenn das Tragteil 14 mit Hilfe der Sperreinrichtung 50 (sh. Fig. 1) in der erhöhten Position fixiert ist. Wird die Sperreinrichtung 50 gelöst, so kann das Tragteil 14 um die Schwenkachsen 20 und 24 herum in eine eingeklappte tiefe Position nach vorne verstellt werden, was in Fig. 2 durch die bogenförmigen, zu den Schwenkachsen 20 und 24 konzentrischen, Pfeillinien 66 angedeutet ist. Mit der Bezugsziffer 44 ist auch in Fig. 2 die am Tragteil 14 vorgesehene Führungseinrichtung für den Führungs-Endabschnitt 42 der Diagonalstrebeneinrichtung 40 bezeichnet.

## Patentansprüche

1. Integrierbarer Kindersitz für einen Kraftfahrzeugsitz, insbes. für einen Kraftfahrzeugsitz im Fondbereich, wobei der Kindersitz (10) zwischen einer eingeklappten tiefen Position und einer ausgeklappten erhöhten Position verstellbar ist, mit einem Grundteil (12) und einem Tragteil (14), die mittels einer vorderen und einer rückseitigen Parallelogrammarm-Einrichtung (16, 18) miteinander gelenkig verbunden sind, mit einer Diagonalstrebeneinrichtung (40), die mit einem Führungs-Endabschnitt (42) entlang einer am Tragteil (14) oder an der vorderen Parallelogrammarm-Einrichtung (16) vorgesehenen Führungseinrichtung (44) linear beweglich geführt ist, und mit einer Sperreinrichtung (50) zum Fixieren des Tragteiles (14) in der aufgeklappten erhöhten Position,
**dadurch gekennzeichnet,**
**daß** die Diagonalstrebeneinrichtung (40) mit ihrem vom Führungs-Endabschnitt (42) entfernten zweiten Endabschnitt (52) mit der rückseitigen Parallelogrammarm-Einrichtung (18) gelenkig verbunden ist, und daß die rückseitige Parallelogrammarm-Einrichtung (18) eine Crash-Schwachstelle (38) aufweist.

2. Kindersitz nach Anspruch 1,
**dadurch gekennzeichnet, daß** die Gelenkverbindung (58) der Diagonalstrebeneinrichtung (40) mit der rückseitigen Parallelogrammarm-Einrichtung (18) und die Crash-Schwachstelle (38) eng benachbart vorgesehen sind.

3. Kindersitz nach Anspruch 2,
**dadurch gekennzeichnet,**
**daß** die Gelenkverbindung (58) mit der Crash-Schwachstelle (38) axial mindestens annähernd fluchtet.

4. Kindersitz nach einem der Ansprüche 1 bis 3,
**dadurch gekennzeichnet,**
**daß** die Parallelogrammarm-Einrichtungen (16, 18) als U-Profilelemente mit einem Grundteil (28; 32) und vom Grundteil (28; 32) seitlich wegstehenden Schenkelelementen (30; 34) ausgebildet sind.

5. Kindersitz nach Anspruch 4,
**dadurch gekennzeichnet,**
**daß** die Schenkelelemente (34) der rückseitigen Parallelogrammarm-Einrichtung (18) zur Ausbildung der Crash-Schwachstelle (38) miteinander deckungsgleich vorgesehene Aussparungen (36) aufweisen.

6. Kindersitz nach einem der vorhergehenden Ansprüche,
**dadurch gekennzeichnet,**
**daß** die Sperreinrichtung (50) in der aufgeklappten erhöhten Position des Tragteiles (14) zum Festlegen des Führungs-Endabschnittes (32) der Diagonalstrebeneinrichtung (40) im Übergangsbereich zwischen dem Tragteil (14) und der vorderen Parallelogrammarm-Einrichtung (16) vorgesehen ist.

7. Kindersitz nach einem der Ansprüche 1 bis 5,
**dadurch gekennzeichnet, daß** die Sperreinrichtung (50) in der erhöhten Position des Tragteiles (14) zum Festlegen des Tragteiles (14) an der vorderen Parallelogrammarm-Einrichtung (16) vorgesehen ist.

## Claims

1. Integratable child seat for a motor-vehicle seat, in particular for a rear motor-vehicle seat, it being possible for the child seat (10) to be adjusted between a swung-in low-level position and a swung-out raised position, having a basic part (12) and a carrying part (14) which are connected to one another in an articulated manner by means of a front and a rear parallelogram-arm arrangement (16, 18), having a diagonal-brace arrangement (40) which is guided in a linearly movable manner, by way of a guide end section (42), along a guide arrangement (44) provided on the carrying part (14) or on the front parallelogram-arm arrangement (16), and having a blocking arrangement (50) for fixing the carrying part (14) in the swung-up raised position, **characterized in that** the diagonal-brace arrangement (40) is connected in an articulated manner to the rear parallelogram-arm arrangement (18) by way of its second end section (52), which is remote from the guide end section (42), and **in that** the rear parallelogram-arm arrangement (18) has a crash weak point (38).

2. Child seat according to Claim 1, **characterized in that** the articulated connection (58) of the diagonal-brace arrangement (40) to the rear parallelogram-arm arrangement (18) and the crash weak point (38) are closely adjacent.

3. Child seat according to Claim 2, **characterized in that** the articulated connection (58) is axially at least more or less aligned with the crash weak point (38).

4. Child seat according to one of Claims 1 to 3, **characterized in that** the parallelogram-arm arrangements (16, 18) are designed as U-profile elements with a basic part (28; 32) and leg elements (30; 34) projecting laterally away from the basic part (28; 32).

5. Child seat according to Claim 4, **characterized in that** the leg elements (34) of the rear parallelogram-arm arrangement (18) have recesses (36) which are provided congruently with one another in order to form the crash weak point (38).

6. Child seat according to one of the preceding claims, **characterized in that** the blocking arrangement (50) is provided, in the swung-up raised position of the carrying part (14), for securing the guide end section (42) of the diagonal-brace arrangement (40) in the transition region between the carrying part (14) and the front parallelogram-arm arrangement (16).

7. Child seat according to one of Claims 1 to 5, **characterized in that** the blocking arrangement (50) is provided, in the raised position of the carrying part (14), for securing the carrying part (14) on the front parallelogram-arm arrangement (16).

## Revendications

1. Siège pour enfants intégrable, pour siège d'automobile et en particulier pour siège d'automobile situé dans la région du fond, dans lequel le siège pour l'enfant (10) est réglable entre une position enfoncée par rabattement vers l'intérieur et une position relevée par rabattement vers l'extérieur, du type comportant
une portion de base (12) et une portion de support (14) qui sont articulées l'une à l'autre par embiellage au moyen d'un agencement frontal et d'un agencement postérieur formant un système à bras de parallélogramme (16, 18),
un système de mise sous tension en diagonale (40) qui, par une section terminale de guidage (42) est guidé de façon mobile linéairement le long d'un dispositif de guidage (44) prévu sur la portion de support (14) ou sur l'agencement à bras de parallélogramme frontal (16),
et un système de blocage (40) pour la fixation de la portion de support (14) dans la position relevée par rabattement vers l'extérieur,
**caractérisé en ce que** le système de mise sous tension en diagonale (40) est réuni par embiellage de la seconde section terminale (52) éloignée de la section terminale de guidage (42), avec l'agencement à bras de parallélogramme postérieur (18), et **en ce que** l'agencement à bras de parallélogramme postérieur (18) présente une zone (38) faible en cas d'accident.

2. Siège pour enfant selon la revendication 1, **caractérisé en ce que** la liaison par embiellage (58) du système de mise sous tension en diagonale (40) avec l'agencement à bras de parallélogramme postérieur (18) est prévue étroitement voisine et la zone (38) faible en cas d'accident.

3. Siège pour enfant selon la revendication 2, **caractérisé en ce que** la liaison par embiellage (58) et la zone (38) faible en cas d'accident sont axialement au moins presque alignées.

4. Siège pour enfant selon l'une des revendications 1 à 3, **caractérisé en ce que** les agencements à bras de parallélogramme (16, 18) sont réalisés au moyen d'éléments profilés en U avec une portion de fond (28, 32) et deux éléments constituant des ailes (30, 34) partant latéralement de la portion de fond (28, 32).

5. Siège pour enfant selon la revendication 4, **caractérisé en ce que** les éléments en forme d'ailes (34) de l'agencement à bras de parallélogramme postérieur (18) présentent des évidements (36) prévus pour se recouvrir les uns les autres en vue de créer la zone faible en cas d'accident (38).

6. Siège pour enfant selon l'une quelconque des revendications précédentes, **caractérisé en ce que** le dispositif de blocage (50), dans la position relevée par basculement vers l'extérieur de la portion de support (14) est prévu avec superposition entre la portion de support (14) et l'agencement à bras de parallélogramme frontal (16), en vue de l'immobilisation de la section terminale de guidage (32) du système de mise sous tension en diagonale (40).

7. Siège pour enfant selon l'une des revendications 1 à 5, **caractérisé en ce que** le dispositif de blocage (50), en position relevée de la portion de support (14) est prévu sur l'agencement à bras de parallélogramme frontal (16) en vue de l'immobilisation de la portion de support (14).
